Europäisches Patentamt

European Patent Office

Office européen des brevets

(19)

(11) Publication number: **0 111 108**
**B1**

(12) **EUROPEAN PATENT SPECIFICATION**

(45) Date of publication of patent specification: **17.09.86**

(21) Application number: **83110324.7**

(22) Date of filing: **05.02.80**

(60) Publication number of the earlier application in accordance with Art. 76 EPC: **0 045 300**

(51) Int. Cl.⁴: **B 62 D 55/10, B 62 D 55/30**

(54) Equalizer bar support assembly.

(43) Date of publication of application:
**20.06.84 Bulletin 84/25**

(45) Publication of the grant of the patent:
**17.09.86 Bulletin 86/38**

(84) Designated Contracting States:
**DE FR GB**

(56) References cited:
**US-A-4 018 295**
**US-A-4 088 377**

(73) Proprietor: **CATERPILLAR INC.**
**100 Northeast Adams Street**
**Peoria Illinois 61629-6490 (US)**

(72) Inventor: **Balzer, David J.**
**116 Mackinac Drive**
**East Peoria Illinois 61611 (US)**
Inventor: **Kessinger, Orville E.**
**13 Timberline Drive Hickory Hills Addition**
**Blue Grass Iowa 52726 (US)**

(74) Representative: **Skone James, Robert Edmund et al**
**GILL JENNINGS & EVERY 53-64 Chancery Lane**
**London WC2A 1HN (GB)**

Courier Press, Leamington Spa, England.

## Description

This invention relates to a vehicle having a track frame; an equalizer bar pivotally mounted on bearing means carried by the track frame; and an equalizer bar support assembly.

Many tracked vehicles have support apparatus for attaching and supporting an equalizer bar on a track frame. Such apparatus commonly have an end portion of the equalizer bar rotatably attached to the track frame through a spherical bearing and a bearing support. The bearing support has one end portion secured to the track frame and has another end portion connected to a support plate which is press fitted to a spaced apart portion of the track frame. A typical construction is shown and described in U.S. Patent Specification No. 4,018,295.

Although the prior apparatus effectively supports the equalizer bar on the track frame, difficulty is encountered in attempting to remove the support components which have been assembled by interference fits (press fit). Specifically, while disassembling the various components, the support plate, which has been pressed in the track frame, requires a large amount of force to free it. Often, this force is provided by using a valve housing, which is connected to a piston projecting from a cylinder of a track tensioner device, against the support plate. Occasionally, the support plate is so firmly pressed in the frame that the force generated by the piston compresses the tensioning spring in the track tensioner so that when the support plate does break loose from the track frame, the stored energy in the spring may propel the freed support plate from the track frame and the piston may inadvertently become separated from the track tensioner device requiring cleaning and reassembling before the new bearings can be installed in the track frame.

According to the present invention, a vehicle has a track frame; an equalizer bar pivotally mounted on bearing means carried by the track frame; and an equalizer bar support assembly comprising a flanged bearing support having a cylindrical portion axially projecting from a flanged portion; support means secured to the cylindrical portion remote from the flanged portion, the support means being press fitted to the track frame, and the equalizer bar support assembly being partially removable from the track frame upon engagement by a part of a track tensioning device; characterised by limiting means operatively associated with the support means for limiting the amount by which the equalizer bar assembly may be removed from the track frame by the track tensioning device. Preferably, the limiting means is a depending tang formed integrally with the support means, the tang overlapping a portion of the track frame so as to engage the track frame during removal of the support means by the track tensioning device. The tang may be so shaped and sized as to limit the movement of the support means within the track frame when the valve housing and piston of the track tensioning device is used to free the support means from the track frame.

An example of a vehicle in accordance with the invention will now be described with reference to the accompanying drawings, in which:—

Figure 1 is a part sectional front elevation with parts broken away of an equalizer bar mounted on a track frame of the vehicle;

Figure 2 is a side elevation partially in section of the equalizer bar support assembly on the track frame of Figure 1;

Figure 3 is an enlarged side elevation partially in section of the equalizer bar support assembly shown in Figure 2; and,

Figure 4 is an end elevation of the assembly shown in Figure 3.

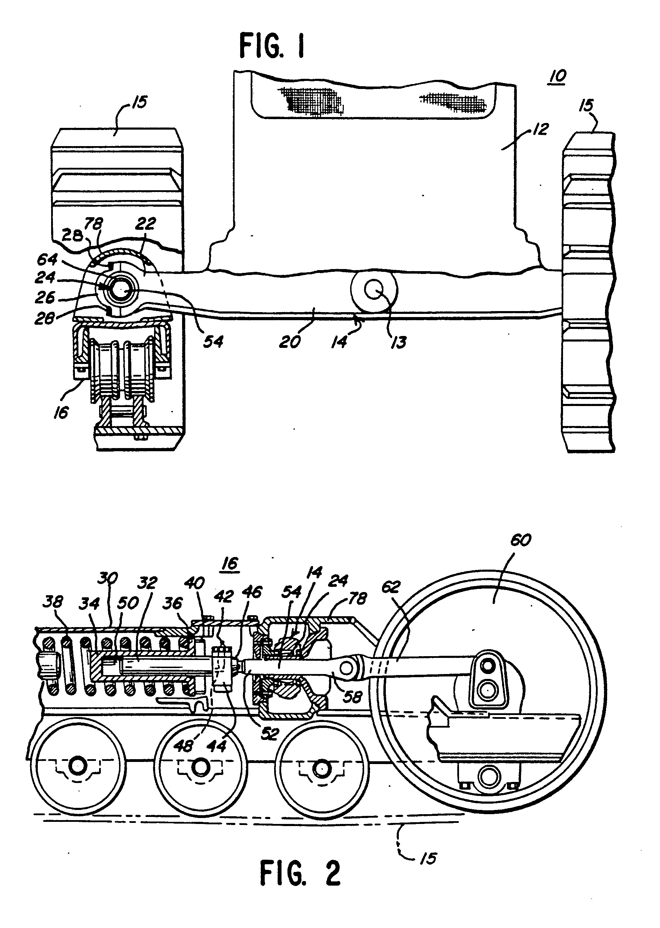

Referring to Figure 1, a track-laying vehicle 10 has a main frame 12 to which the midpoint of an equalizer bar 14 is attached. The equalizer bar 14 is positioned generally perpendicular to the vertical centerline of the vehicle 10. The vehicle 10 includes tracks 15 encircling track roller frames 16, disposed on either side of the main frame 12. Each end of the equalizer bar 14 is connected to a track roller frame 16 in a similar manner, hence, only one equalizer bar support assembly will be described in detail.

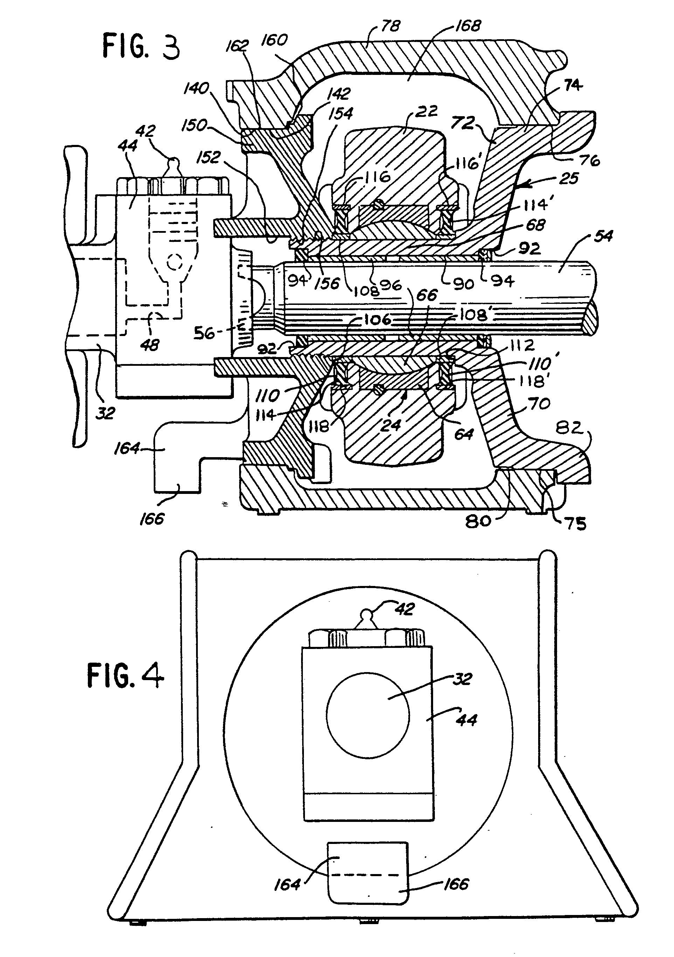

The equalizer bar 14 consists of a main body 20 pivotally secured at 13 to the main frame 12. Each end portion 22 of the equalizer bar 14 is mounted on a spherical bearing 24 carried by a flanged bearing support 25 (Figure 3) on the track roller frame 16. An end cap 26 is secured by bolts 28 to the end of the equalizer bar 14 to attach the equalizer bar 14 in pivoting relationship to the track roller frame 16. A typical connection of the equalizer bar 14 to the bearing support 25 of the track roller frame 16 is shown and described in U.S. Patent Specification No. 4,018,295.

Referring now to Figure 2 and, as is generally shown in U.S. Patent Specification No. 3,963,047, the track roller frame 16 includes various components to maintain proper tensioning of the track 15 as the vehicle 10 moves over uneven terrain. The track roller frame 16 includes a housing 30 in which a piston 32 is slidably positioned inside a cylinder 34 which has an outwardly flared abutment shoulder 36. One end of a helical spring 38 bears against the abutment shoulder 36 which, in turn, presses against a fixed shoulder 40 supported by the housing 30 of the track roller frame 16. The other end (not shown) of the spring 38 bears against the opposite end of the housing 30. A valve 42 is mounted in a valve body 44 carried by an outer portion 46 of the piston 32. The valve 42 communicates through passageways 48 in the valve body 44 with a cavity 50 in the cylinder 34. One end portion 52 of a push rod 54 is inserted into a mating recess 56 (see Figure 3) in the outer portion 46 of the piston 32. The other end portion 58 of the push rod 54 is connected to an idler wheel 60 of the track roller frame through a linkage 62. Proper track tensioning is achieved by injecting a non-compressible fluid, such as grease, through the valve 42 and passageway 48 into the cavity 50 of the cylinder 34 to force the piston 32 and the push rod 54 against the linkage 62 and the idler wheel 60 to take up any slack in the track 15 created by movement over the terrain.

Referring to Figure 3, the spherical bearing 24 has an outer race 64 seated in the end portion 22 and cap 26 of the equalizer bar 14 and has an inner race 66 press fitted on an axially extending cylindrical portion 68 of the flanged bearing support 25.

The bearing support 25 has an axially facing flanged or cup-shaped body portion 70 which includes a disc-shaped wall 72 extending from the cylindrical portion to a cylindrically-shaped wall having a radially outwardly facing peripheral surface 75 seating in an inwardly facing cylindrical opening 76 formed in one portion of a support member 78 of the track frame 16. The cylindrical wall 74 has a step or undercut 80 at the axially inner portion of the peripheral surface 75 thereof to serve as a pilot portion for guiding the bearing support 25 into the cylindrical opening 76 during initial assembly of the bearing support 25 to the support member 78 of the track roller frame 16. The cylindrical wall 74 has a radially extending mounting lip or flange 82, which is generally elliptical in shape. In the vicinity of each focus of the elliptical shaped lip or flange 82, a mounting hole (not shown) is located. Two mounting bolts (not shown) extend through the mounting holes into corresponding threaded holes, not shown, located in the support member 78 of the track roller frame 16 to secure the flanged bearing support 25 thereto.

A bore 90 extends through the cylindrical portion 68 of the flanged bearing support 25 and has a diameter which is slightly larger than the outer diameter of the push rod 54. A pair of seal recesses 92 are located at the opposite ends of the cylindrical portion 68 adjacent to the ends of the bore 90. Seals 94 are seated in the seal recesses 92 and seal between the cylindrical portion 68 of the bearing support 25 and the outer surface of the push rod 54. A pair of sleeve bearings 96 are press fitted in bore 90 and have a sliding fit with rod 54. With the flanged bearing support 25 mounted on the push rod 54, the push rod 54 is free to travel in a longitudinal direction inside the bearings 96 and seals 94 and the equalizer bar 14 is free to rotate about the common axis of the push rod 54 and the cylindrical portion 68 of the bearing support 25.

A single support plate 150 which has a bore 152 extending therethrough is provided to secure the flanged bearing support 25 to the support member 78. The bore 152 is threaded with threads 154 which mate with threads 156 on the cylindrical portion 68 of the flanged bearing support 25. An outer flange 160 and a radially outwardly facing outer surface 162 contact an inner facing contact surface 140 of an opening 142 in the support member 78.

An abutment shoulder 106 is formed on the threaded support plate 150 and extends axially away from the end of the threaded bore 152 to abut one end of an inner ring 108 of a resilient seal assembly 110. The other end of the inner ring 108 abuts against the inner race 66 of the spherical bearing 24. The flanged bearing support 25 has an abutment shoulder 112 abutting one end of a second inner ring 108' of a second resilient seal assembly 110'. The other end of the second inner ring 108' abuts the opposite end of the inner race 66. The support plate 150, threaded on the cylindrical portion 68, traps the first and second inner rings 108, 108' of the seal assemblies 110, 110' and the inner raceway 66 between the shoulder 106 on the threaded support plate 150 and the shoulder 112 on the flanged bearing support 25. The seal assemblies 110, 110' include rubber rings 114, 114' bonded to the inner rings 108, 108' and to outer rings 116, 116' respectively. The outer rings 116, 116' are seated in recesses 118, 118' in the equalizer bar 14 and in the end cap 26 bolted to the end of the equalizer bar. The inner rings 108, 108' of the seal assemblies 110, 110' and the inner raceway 66 of the bearing 24 are press fitted on the outer surface of the cylindrical portion 68.

Integrally formed with the support plate 150 is a downwardly depending tang 164 which has a portion 166 extending in overlapping relationship to the support member 78 around the opening 142. The support plate 150 can be driven out of the opening 142 in the support member 78 by extending the piston 32·to move the valve body 44 of the valve 42 against the support plate 150 until the support plate 150 moves into an enlarged chamber 168 within the confines of the support member 78. The portion 166 of tang 164 engages the edge of the support member 78 around the opening 142 to limit complete removal of the support plate 150 from the support member 78.

The push rod 54 is movable longitudinally through the flanged bearing support 25 to maintain proper tensioning by the track roller frame 16. Furthermore, the equalizer bar 14 is able to pivot about the spherical bearing 24 mounted on the flanged bearing support 25 in response to movement over an uneven surface.

To replace or repair the bearings 24, 96 or seals 94, or other worn parts of the assembly, the push rod is disconnected from the linkage 62 and is removed from the bearing support 25 by pulling axially forward therefrom. The bolts 28 are removed to release cap 26 from the equalizer bar 14 whereupon the equalizer bar 14 is removed from the track roller frame 16. The bearing support 25 is then unbolted from the support member 78. Grease, or the like, is pumped through the valve 42 into the cavity 50 of the cylinder 34 to drive the piston 32 to the right (Fig. 2), thereby engaging the valve body 44 of the valve 42 against the support plate 150. When sufficient pressure has been generated on the piston 32, the outwardly facing surface 162 of the support plate 150 will be separated from the inner facing contact surface 140 of the opening 142. The support plate 150 will be moved axially until the portion 166 of the tang 164 engages the support member 78 along the edge of opening 142. The pressure in the cylinder 34 is released. If the portion 166 of tang 164 is long, it will be necessary to unscrew the bearing support 25 from the support plate 150 before the bearing support 25, bearing 24, and seal assemblies 110 can be removed from the chamber 168 in the support member 78. If the portion 166 of the tang 164 is not too long, it will be possible to cant the bearing support 25 and the attached support plate 150 to clear the tang 164 through the opening 142 thereby removing the bearing support 25, bearing 24, seal assemblies 110 and support plate 150 as a unit. After the bearings and/or seals are serviced or replaced, the unit is reassembled in the support member 78 whereupon bolts 86 through flanges 82 in the bearing support and into the support member will, when drawn up tight, seat the support plate 150 and bearing support 25 in the support member 78 of the track frame 16.

## Claims

1. A vehicle (10) having a track frame (16); an equalizer bar (14) pivotally mounted on bearing means (24) carried by the track frame (16); and an equalizer bar support assembly comprising a flanged bearing support (25) having a cylindrical portion (68) axially projecting from a flanged portion (70); support means (150) secured to the cylindrical portion (68) remote from the flanged portion (70), the support means (150) being press fitted to the track frame (16), and the equalizer bar support assembly being partially removable from the track frame (16) upon engagement by a part (44) of a track tensioning device; characterised by limiting means (164) operatively associated with the support means (150) for limiting the amount by which the equalizer bar assembly may be removed from the track frame (16) by the track tensioning device.

2. A vehicle (10) according to claim 1, wherein the limiting means is a depending tang (164) formed integrally with the support means (150), the tang (164) overlapping a portion of the track frame (16) so as to engage the track frame (16) during removal of the support means (150) by the track tensioning device.

3. A vehicle (10) according to claim 2, wherein the size of the tang (164) is such that the equalizer bar support assembly may be completely removed manually from the track frame (16), as a unit, after partial removal by the track tensioning means.

4. A vehicle according to any of claims 1 to 3, wherein the cylindrical portion (68) of the flanged bearing support (25) has a bore (90) therein, bearing means (96) are seated in the bore (90), and seal means (94) are seated in seal recesses (92) in the cylindrical portion (68), a push rod (54) of the track tensioning device being slidably received in the cylindrical portion.

5. A vehicle according to any of claims 1 to 4, wherein the cylindrical portion (68) of the bearing support (25) has external threads (156) thereon, the support plate (150) has a threaded bore (152) therethrough, the threads (156) on the cylindrical portion (68) mating with the threaded bore (152) for securing the support plate (150) to the bearing support (25).

## Patentansprüche

1. Ein Fahrzeug (10) mit einem Kettenrahmen (16), einer Ausgleichsstange (14) schwenkbar gelagert an Lagermitteln (24) getragen vom Kettenrahmen (16) und eine Ausgleichsstangentraganordnung, die eine geflanschte Lagerhalterung (25) mit einem zylindrischen Teil (68) aufweist, der von einem geflanschten Teil (70) axial vorsteht, Halterungsmittel (150) befestigt am zylindrischen Teil (68) entfernt gegenüber dem geflanschten Teil (70), wobei die Halterungsmittel (150) durch Preßpassung am Kettenrahmen (16) angeordnet sind, und die Ausgleichsstangentraganordnung partiell vom Kettenrahmen (16) entfernbar ist, und zwar beim Eingriff durch einen Teil (44) einer Kettenspannvorrichtung, gekennzeichnet durch Begrenzungsmittel (164) die betriebsmäßig mit den Halterungsmitteln (150) assoziiert sind, um die Größe zu begrenzen um die die Ausgleichsstangenanordnung vom Kettenrahmen (16) durch mit Kettenspannvorrichtung entfernt werden kann.

2. Fahrzeug (10) nach Anspruch 1, wobei die Begrenzungsmittel eine herabstehende Zunge (164) sind, und zwar integral ausgebildet mit den Halterungsmitteln (150) wobei die Zunge (164) einen Teil des Kettenrahmens (16) derart überlappt, um mit dem Kettenrahmen (16) während der Entfernung der Halterungsmittel (150) durch die Kettenspannvorrichtung in Eingriff zu kommen.

3. Fahrzeug (10) nach Anspruch 2, wobei die Größe der Zunge (164) derart ist, daß die Ausgleichsstangentraganordnung vollständig von Hand vom Kettenrahmen (16) als eine Einheit entfernt werden kann, und zwar nach der teilweisen Entfernung durch die Kettenspannmittel.

4. Fahrzeug nach einem der Ansprüche 1 bis 3, wobei der Zylinderteil (68) der geflanschten Lagerhalterung (25) eine Bohrung (90) darinnen aufweist, ferner Lagermittel (96) eingesetzt in die Bohrung (90) und Dichtungsmittel (94) in einer Dichtungsausnehmung (92) im Zylinderteil (68) sitzend, wobei eine Schubstange (54) der Kettenspannvorrichtung gleitend in dem Zylinderteil aufgenommen ist.

5. Fahrzeug nach einem der Ansprüche 1 bis 4, wobei der Zylinderteil (68) der Lagerhalterung (25) Außengewinde (156) darauf aufweist, wobei die Halterungsplatte (150) eine mit Gewinde versehene Bohrung (152) hindurchgehend besitzt, und wobei die Gewinde (156) an dem Zylinderteil (68) mit der Gewindebohrung (152) in Eingriff stehen, um die Halterungsplatte (150) an der Lagerhalterung (25) zu befestigen.

**Revendications**

1. Véhicule (10) ayant un châssis de chemin de roulement (16); une barre égalisatrice (14) montée pivotante sur des moyens d'appui (24) portés par le châssis de chemin de roulement (16); et un ensemble de support de barre égalisatrice comprenant un support d'appui à collerette (25) ayant une partie cylindrique (68) faisant axialement saillie depuis une partie à collerette (70); des moyens de support (150) fixés à la partie cylindrique (68) à distance de la partie à collerette (70), les moyens de support (150) étant ajustés à la presse sur le châssis de chemin de roulement (16) et l'ensemble de support de barre égalisatrice pouvant être en partie apte à être écarté du châssis de chemin de roulement (16) lors de la mise en prise par une partie (44) du dispositif tendeur du chemin de roulement caractérisé par des moyens de limitation (164) associés de manière fonctionnelle avec les moyens de support (150) en vue de limiter l'importance avec laquelle l'ensemble de support de barre égalisatrice peut être écarté du châssis de chemin de roulement (16) par le dispositif tendeur du chemin de roulement.

2. Véhicule (10) selon la revendication 1, dans lequel les moyens de limitation sont une patte pendante (164) faisant partie intégrante des moyens de support (150), la patte (164) chevauchant une partie du châssis de chemin de roulement (16) de façon à venir en prise avec le châssis de chemin de roulement (16) lors de l'écartement des moyens de support (150) par le dispositif tendeur du chemin de roulement.

3. Véhicule (10) selon la revendication 2, dans lequel la taille de la patte (164) est telle que l'ensemble de support de barre égalisatrice peut être complètement écarté manuellement du châssis de chemin de roulement (16) comme un bloc, après l'écartement partiel par les moyens tendeurs du chemin de roulement.

4. Véhicule selon l'une quelconque des revendications 1 à 3, dans lequel la partie cylindrique (68) du support d'appui à collerette (25) comporte un perçage (90), des moyens d'appui (96) sont logés dans le perçage (90) et des moyens d'étanchéité (94) sont logés dans des évidements (92) pour joints d'étanchéité, ménagés dans la partie cylindrique (68), une tige-poussoir (54) du dispositif tendeur du chemin de roulement étant logé à coulissement dans la partie cylindrique.

5. Véhicule selon l'une quelconque des revendications 1 à 4, dans lequel la partie cylindrique (68) du support d'appui (25) porte un filetage externe (156), la plaque de support (150) comporte un perçage fileté (152) la traversant, le filetage (156) ménagé sur la partie cylindrique (68) s'adaptant avec le perçage fileté (152) en vue de fixer la plaque de support (150) au support d'appui (25).

# 0 111 108

## FIG. 1

## FIG. 2

FIG. 3

FIG. 4